# EUROPÄISCHE PATENTSCHRIFT

(11) **EP 3 585 027 B1**
(45) Veröffentlichungstag und Bekanntmachung des Hinweises auf die Patenterteilung: **03.11.2021**
(21) Anmeldenummer: 18178764.9
(22) Anmeldetag: 20.06.2018
(51) Int. Cl.: H04L 29/06, G06F 21/33, H04L 29/08

(54) **VERFAHREN ZUR ANBINDUNG EINES ENDGERÄTES AN EINE VERNETZBARE RECHNER-INFRASTRUKTUR**
METHOD FOR CONNECTING A TERMINAL TO A CROSSLINKABLE COMPUTER INFRASTRUCTURE
PROCÉDÉ DE CONNEXION D'UN TERMINAL À UNE INFRASTRUCTURE DE CALCUL POUVANT ÊTRE CONNECTÉE AU RÉSEAU

(43) Veröffentlichungstag der Anmeldung: 25.12.2019
(73) Patentinhaber: Siemens Aktiengesellschaft, 80333 München (DE)
(72) Erfinder: Schwarz, Robert, 90513 Zirndorf (DE)

(56) Entgegenhaltungen:
- DE-A1-102012 215 167
- DE-A1-102015 211 345
- US-A1- 2016 112 406

## Beschreibung

Die Erfindung betrifft ein Verfahren zur Anbindung eines Endgerätes an eine vernetzbare Rechner-Infrastruktur, wobei ein Geräte-Zertifikat erstellt und einem Verwender des Endgerätes zur Verfügung gestellt wird, wobei das Geräte-Zertifikat in das Endgerät eingegeben wird, wobei das Endgerät anhand des Geräte-Zertifikats registriert wird, und wobei bei einer erfolgreichen Identifizierung des Endgerätes für dieses eine Nutzung der vernetzbaren Rechner-Infrastruktur freigegeben wird.

Das "Internet der Dinge" ("internet of things", IoT) ist ein Konzept, um physisch greifbare Geräte, welche räumlich im Prinzip beliebig weit voneinander getrennt sein können, miteinander zu vernetzen, und sie somit durch entsprechende Kommunikationstechniken und -protokolle miteinander zusammenarbeiten zu lassen. Dies kann beispielsweise für Maschinen in Konstruktionsprozessen der Fall sein, wo sich Konstruktionsanlagen an verschiedenen Orten miteinander über einen Fortschritt der Produktion oder auch über an einem Ort auftretende Probleme informieren, und so für eine effizientere Auslastung der Anlagen aufeinander abstimmen. Ebenso können beispielsweise Anlagen zur insbesondere regenerativen Energieerzeugung sowie Anlagen zur Energieübertragung miteinander kommunizieren, um in Abhängigkeit von den an verschiedenen Orten erzeugten Leistungen die Einspeisung und Auslastung im Netz zu regeln.

Eine wesentliche Herausforderung für die Vernetzung realer Geräte und eine erfolgreiche Verbindung für das Ausnutzen ihrer Synergien bildet hierbei das Erstellen eines geeigneten Kommunikationsprotokolls. Die unterschiedlichen, zu vernetzenden Geräte, welche oftmals von verschiedenen Herstellern gefertigt sein können, müssen Informationen den anderen Teilnehmern im IoT in einer Weise zur Verfügung stellen, in welcher die Informationen für diese verarbeitbar werden. Dies gilt umso mehr, als große Anlagen oftmals für verschiedene ihrer Funktionen Protokolle verwenden, welche je nach Funktion durch unterschiedliche Standards gegeben sind.

Für ein Kommunikationsprotokoll zur Anbindung von Geräten an das IoT ist zudem die dem Protokoll inhärente Sicherheit der Verbindung ein wichtiger Aspekt. Einerseits soll garantiert werden, dass nur entsprechend berechtigte Geräte in einem Back-End des IoT-Netzes Zugriff auf bestimmte Funktionen erhalten, sodass die Authentifizierung für ein Verifizieren dieser Berechtigung möglichst sicher sein soll.

Andererseits ist jedoch oftmals auch eine möglichst einfache und anwenderfreundliche Anbindung der Geräte erwünscht. Derzeit erfolgt eine Anbindung eines Gerätes in bestimmten Cloud-Diensten oftmals über eine vorige Registrierung des Gerätes in einem Backend der Cloud, beispielsweise durch Hinterlegung eines privaten Schlüssels, was jedoch infolge der Verteilung des privaten Schlüssels des Gerätes sehr aufwendig ist, und somit bei einer steigende Anzahl an anzubindenden Geräten zu einem ineffizienten Aufwand führt.

Die Dokumente DE 10 2012 215167 A1 und DE 10 2015 211345 A1 aus dem Stand der Technik offenbaren Verfahren zur Anbindung eines Geräts an ein Netzwerk.

Der Erfindung liegt daher die Aufgabe zugrunde, ein Verfahren zur Anbindung eines Endgerätes an einen einem Nutzer zugewiesene Bereich einer vernetzbaren Rechner-Infrastruktur anzugeben, welches bei möglichst hoher Sicherheit für den Nutzer möglichst komfortabel durchzuführen ist.

Die Aufgabe wird durch die in den unabhängigen Ansprüchen beschriebenen Maßnahmen gelöst.

Die genannte Aufgabe wird erfindungsgemäß gelöst durch ein Verfahren zur Anbindung eines Endgerätes an eine vernetzbare Rechner-Infrastruktur, wobei ein insbesondere digitales Geräte-Zertifikat erstellt und einem Verwender des Endgerätes zur Verfügung gestellt wird, wobei das Geräte-Zertifikat in das Endgerät eingegeben wird, wobei eine Datenverbindung vom Endgerät zu einer den Funktionen der vernetzbaren Rechner-Infrastruktur vorgeschalteten Zugangszone hergestellt wird, welche von den Funktionen der vernetzbaren Rechner-Infrastruktur selektiv durch diese trennbar trennbar ist, wobei das Endgerät anhand des Geräte-Zertifikats in der Zugangszone registriert wird, wobei durch einen Zugriff einer Funktion aus der vernetzbaren Rechner-Infrastruktur auf das in der Zugangszone registrierte Endgerät dieses für die vernetzbare Rechner-Infrastruktur identifiziert wird, und wobei bei einer erfolgreichen Identifizierung des Endgerätes für dieses eine Nutzung der vernetzbaren Rechner-Infrastruktur und insbesondere dessen Funktionen freigegeben wird. Vorteilhafte und teils für sich gesehen erfinderische Ausgestaltungen sind Gegenstand der Unteransprüche und der nachfolgenden Beschreibung.

Die vernetzbare Rechner-Infrastruktur umfasst hierbei insbesondere Speichermittel und/oder Prozessor- bzw. Rechenmittel und/oder Programm-Applikationen, welche bevorzugt auf den Rechenmitteln ausführbar sind, und welche insbesondere auf den Speichermitteln hinterlegt sein können. Die vernetzbare Rechner-Infrastruktur ist dabei insbesondere dezentral, d. h. von einer Vielzahl an möglichen räumlichen Standorten aus zugänglich, welche voneinander jeweils erhebliche Abstände aufweisen können. Der Zugang kann hierbei insbesondere über eine Internetverbindung erfolgen. Insofern ist die vernetzbare Rechner-Infrastruktur unabhängig davon, wo die physikalischen Komponenten, also Speichermittel und/oder Prozessor- bzw. Rechenmittel, realisierte sind, durch die Vernetzung mit einem Teilnehmer, welcher insbesondere durch das Endgerät gegeben sein kann, vom jeweiligen Standort des Teilnehmers aus nutzbar.

Das Geräte-Zertifikat wird hierbei insbesondere durch die vernetzbare Rechner-Infrastruktur erstellt werden, wobei beispielsweise im Rahmen einer ihrer Funktionen eine eigene Zertifizierungsfunktion bereitgestellt werden kann, welche für das Erstellen von Geräte-Zertifikaten vorgesehen und eingerichtet sein kann. Das Geräte-Zertifikat kann hierbei einerseits für jedes einzelne, anzubindende Endgerät individuell erstellt werden, oder auch als universelles Geräte-Zertifikat einmalig für eine Vielzahl an Endgeräten erstellt werden. Ebenso sind Mischformen der Umsetzung möglich, indem z.B. für eine Mehrzahl an hinsichtlich bestimmter Merkmale gleichartigen Endgeräten jeweils ein einheitliches Geräte-Zertifikat erstellt wird, wobei für verschiedenartige Endgeräte unterschiedliche Geräte-Zertifikate erstellt werden.

Bevorzugt wird das Geräte-Zertifikat dem Verwender des Endgerätes zum Download über ein entsprechendes Portal im Rahmen der Funktionen der vernetzbaren Rechner-Infrastruktur zur Verfügung gestellt, kann aber auch auf einem physischen Datenträger, welcher einen nicht-flüchtigen Speicher umfasst, zugänglich gemacht werden, z.B. auf einem USB-Speicher odereiner CD-ROM. Die Eingabe des Geräte-Zertifikats in das Endgerät kann je nach Art, wie das Geräte-Zertifikat dem Verwender des Endgeräts zur Verfügung gestellt wird, über eine direkte Datenverbindung des Endgerätes, welches an einen Rechner des Verwenders angeschlossen ist, zum entsprechenden Download-Portal der vernetzbaren Rechner-Infrastruktur erfolgen. Die Eingabe kann alternativ dazu auch über eine kabelgebundene Verbindung zu einem USB-Speicher oder zu einem Rechner erfolgen, welcher mit dem entsprechenden Speichermedium ausgerüstet ist.

Unter einer Nutzung der vernetzbaren Rechner-Infrastruktur durch das Endgerät bei einer erfolgreichen Identifizierung ist insbesondere umfasst, dass das Endgerät im Rahmen der Berechtigungen, welche der Verwender und/oder ein Hersteller des Endgerätes für eine Nutzung hat bzw. haben, selbständig auf entsprechende Speicherbereiche der vernetzbaren Rechner-Infrastruktur zugreifen und dort insbesondere Daten abfragen und/oder eintragen kann, selbständig Prozessor- bzw. Rechenleistung der vernetzbaren Rechner-Infrastruktur zur Implementierung von eigenen Programm-Applikationen und/oder Programm-Applikationen der vernetzbaren Rechner-Infrastruktur nutzen kann, sowie selbständig auf Programm-Applikationen der vernetzbaren Rechner-Infrastruktur zugreifen kann und/oder von solchen aus aufgerufen werden kann. Insbesondere kann das Geräte-Zertifikat durch den Hersteller des Endgerätes im Rahmen des Fertigungsprozesses auf dieses übertragen werden, sodass das Endgerät seinem Verwender vom Hersteller bereits mit dem Geräte-Zertifikat übertragen wird.

Insbesondere umfasst vor diesem Hintergrund das Konzept einer Zugangszone, welche von den Funktionen der vernetzbaren Rechner-Infrastruktur trennbar ist, und dieser vorgeschaltet ist, dass bei einer Registrierung des Endgerätes in der Zugangszone die Funktionen, welche bei einer Freigabe für eine wie oben beschriebene Nutzung der vernetzbaren Rechner-Infrastruktur nach erfolgreicher Identifikation des Endgerätes diesem zur Verfügung stehen, in der Zugangszone noch nicht zu Verfügung stehen, und insbesondere durch das Endgerät selbst bzw. durch eine Handlung seines Verwenders auch nicht ausgewählt werden können. Hiervon ist maximal eine Funktion zur Registrierung des Endgerätes in der Zugangszone selbst und/oder eine Funktion zur Identifizierung des in der Zugangszone registrierten Endgerätes ausgenommen, wobei bevorzugt auch in diesen Fällen die Zugriffs- und Auswahlmöglichkeiten durch das Endgerät selbst und/oder durch dessen Verwender sich streng auf die für die besagte Registrierung bzw. Identifizierung notwendigen Teilfunktionen beschränken.

Die Registrierung des Endgerätes in der Zugangszone anhand des Geräte-Zertifikats kann z.B. über eine Verwendung des Geräte-Zertifikats als Zugangspasswort erfolgen. Insbesondere kann das Geräte-Zertifikat auch dazu verwendet werden, ein Zugangspasswort mittels einer Einwegfunktion zu erzeugen, sodass anhand mit der Kenntnis des Geräte-Zertifikats das Zugangspasswort als zulässig erkennbar ist.

Bevorzugt erfolgt die Registrierung des Endgerätes in der Zugangszone über eine speziell hierfür vorgesehene und eingerichtete Registrierungsfunktion, welche bevorzugt im Rahmen der Funktionen der vernetzbaren Rechner-Infrastruktur implementiert ist. Dies bedeutet, dass zur Registrierung in der Zugangszone der Aufruf der Registrierungsfunktion bevorzugt die einzige Funktion der vernetzbaren Rechner-Infrastruktur ist, welche durch das Endgerät und/oder seinen Verwender vor der Registrierung und bevorzugt auch während des Registrierungsvorgangs aufgerufen werden können, bevor anschließend eine Identifizierung und im Erfolgsfall eine entsprechende "Weiterleitung" zur Nutzung der Funktionen im vollen für den Verwender vorhergesehenen Umfang erfolgt. Die Registrierung erfolgt dabei bevorzugt über eine Überprüfung des Geräte-Zertifikats und/oder eines hiervon insbesondere mittels einer Einwegfunktion entsprechend abgeleiteten Zugangspasswortes durch die Registrierungsfunktion.

Nach einer erfolgreichen Registrierung des Endgerätes ist dieses für den nachfolgenden Vorgang der Identifizierung in der Zugangszone freigegeben. Die Identifizierung des in der Zugangszone registrierten Endgerätes erfolgt bevorzugt über eine speziell hierfür vorgesehene und eingerichtete Identifizierungsfunktion, welche bevorzugt im Rahmen der Funktionen der vernetzbaren Rechner-Infrastruktur implementiert ist. Dies bedeutet, dass bei einem in der Zugangszone registrierten Endgerät der Aufruf der Identifizierungsfunktion bevorzugt die einzige Funktion der vernetzbaren Rechner-Infrastruktur ist, welche durch das in der Zugangszone registrierte Endgerät bzw. durch seinen Verwender aufgerufen werden kann, bevor bei einer erfolgreichen Identifizierung eine entsprechende "Weiterleitung" zur Nutzung der Funktionen im vollen für den Verwender vorhergesehenen Umfang erfolgt.

Die Identifizierung des in der Zugangszone registrierten Endgerätes kann beispielsweise durch eine spezifische Abfrage an den Verwender erfolgen, indem der Verwender Daten hinsichtlich des Endgerätes an die Identifizierungsfunktion übergibt, anhand derer diese das Endgerät identifiziert und insbesondere seine Vertrauenswürdigkeit für eine Nutzung der Funktionen der vernetzbaren Rechner-Struktur im vollen für den Verwender und/oder für das Endgerät vorgesehenen Umfang feststellt. Insbesondere können die Registrierungsfunktion und die Identifizierungsfunktion in einer Zugangszonen-Verwaltung implementiert werden, welche die Vorgänge der Aufnahme in die Zugangszone und das Weiterleiten des Endgerätes durch die Zugangszone hindurch zur Nutzung der Funktionen der vernetzbaren Rechner-Infrastruktur verwaltet.

Das vorgeschlagene Vorgehen ermöglicht es, dass das Endgerät nach einer erfolgreichen Registrierung in der Zugangszone aus dieser heraus selbständig - also insbesondere automatisch - oder durch ein Handeln seines Verwenders die Identifizierung und somit die "vollständige" Freigabe der vernetzbaren Rechner-Infrastruktur erlangen kann. Dadurch muss das einzelne Endgerät nicht mehr für die vollständige vernetzbare Rechner-Infrastruktur zertifiziert werden, und das entsprechende Zertifikat aufwendig dort hinterlegt werden, sondern vielmehr wird die Möglichkeit eingeräumt, dass das durch das Geräte-Zertifikat hergestellte Vertrauen für die Zugangszone der vernetzbaren Rechner-Infrastruktur durch diese selbst zunächst als ausreichend angesehen wird, und eine Identifizierung und somit "vollständige" Freigabe des Endgerätes vom Vertrauen zwischen dem Verwender und einer für die Verwaltung der Identifizierungsfunktion zuständigen Institution abhängig gemacht wird.

Diese Institution kann einerseits für die vollständige Verwaltung der vernetzbaren Rechner-Struktur zuständig sein, oder aber auch nur einen Teilbereich verantworten, z.B. einen Nutzer-Bereich, welcher einem konkreten Nutzer der vernetzbaren Rechner-Infrastruktur zugewiesen wird. In letzterem Fall kann die für die Verwaltung der Identifizierungsfunktion zuständige Institution durch den betreffenden Nutzer selbst gegeben sein, oder von diesem bestimmt und insbesondere kontrolliert werden.

Bevorzugt wird in der vernetzbaren Rechner-Infrastruktur eine Mehrzahl an jeweils verschiedenen Nutzern zugewiesenen Nutzer-Bereichen bereitgestellt, wobei insbesondere ein Nutzer-spezifisches Geräte-Zertifikat für einen bestimmten Nutzer-Bereich erstellt wird, wobei das Endgerät anhand des insbesondere nutzer-spezifischen Geräte-Zertifikats in einer insbesondere dem entsprechenden Nutzer-Bereich der vernetzbaren Rechner-Infrastruktur vorgeschalteten nutzer-spezifischen Zugangszone registriert wird, wobei durch einen Zugriff einer Funktion aus dem entsprechenden Nutzer-Bereich der vernetzbaren Rechner-Infrastruktur das in der insbesondere nutzer-spezifischen Zugangszone registrierte Endgerät identifiziert wird, und wobei bei einer erfolgreichen Identifizierung des Endgerätes für dieses eine Nutzung der vernetzbaren Rechner-Infrastruktur im entsprechenden Nutzer-Bereich freigegeben wird.

Das Einrichten der vernetzbaren Rechner-Infrastruktur für eine Mehrzahl an Nutzern erfolgt hierbei insbesondere über eine jeweilige Zuweisung von entsprechenden Bereichen an die Nutzer. Unter einem Bereich, welcher in der vernetzbaren Rechner-Infrastruktur einem Nutzer zugewiesen ist, ist dabei insbesondere ein abgegrenzter Speicherplatz auf dem Speichermittel und/oder die Berechtigung zur Nutzung und Anwendung von bestimmten Programm-Applikationen durch den betreffenden Nutzer, insbesondere in Verbindung mit den in seinem abgegrenzten Speicherplatz gespeicherten Daten umfasst. Bevorzugt sind hierbei die Programm-Applikationen auf einem gesonderten Speicherbereich der Speichermittel hinterlegt, sodass eine konkrete Programm-Applikation bei einem gewünschten Zugriff durch einen konkreten Nutzer bevorzugt nach einer verifizierten Berechtigung des betreffenden Benutzers für diese Programm-Applikation den Prozessor- bzw. Rechenmitteln zur Ausführung zur Verfügung gestellt wird.

Das nutzer-spezifische Geräte-Zertifikat ist insbesondere nur für den zugehörigen Nutzer-Bereich bzw. eine Registrierung in der diesem vorgelagerten Zugangszone gültig und somit für andere Nutzer-Bereiche und die entsprechenden Zugangszonen ungültig. Unter einer Registrierung in einer nutzer-spezifischen Zugangszone ist dabei insbesondere umfasst, dass von dort aus nur eine Weiterleitung des Endgerätes in den entsprechend zugeordneten Nutzer-Bereich möglich ist, und nicht in andere Nutzer-Bereiche, und somit der Zugriff auf Speicherbereiche anderer Nutzer-Bereiche und diesen exklusiv zugeordnete Programm-Applikationen nicht möglich ist.

Das vorgeschlagene Vorgehen erlaubt es, dass ein Nutzer nun selbst entscheiden kann, auf welche Weise er das in der Zugangszone, welche insbesondere ebenfalls nutzer-spezifisch ausgestaltet sein kann, registrierte Endgerät identifizieren und somit für eine Nutzung der Funktionen der vernetzbaren Rechner-Infrastruktur in "seinem" Bereich freigeben möchte, und welche Sicherheitshürden er hierbei vorsehen möchte. Insbesondere kann dabei für die Identifizierung ein besonderes Vertrauen des Nutzers in den Verwender ausgenutzt werden, sodass eine zentrale Zertifizierung des Endgerätes für die gesamte vernetzbare Rechner-Infrastruktur ausbleiben kann, was die Anbindung wesentlich erleichtert.

Bevorzugt wird dabei das nutzer-spezifisches Geräte-Zertifikat durch den Nutzer zur Verfügung gestellt. Hierdurch kann der Nutzer unabhängig einer zentralen Zertifizierungs- oder Identifizierungsstelle oder entsprechenden -funktion der vernetzbaren Rechner-Infrastruktur die von ihm als vertrauenswürdig eingestuften Endgeräte anbinden.

Als weiter vorteilhaft erweist es sich, wenn im dem Nutzer zugewiesenen Bereich eine Mehrzahl an Subnutzer-Bereichen bereitgestellt wird, welche jeweils für einen Zugriff durch unterschiedliche Subnutzer eingerichtet sind, wobei bei einer erfolgreichen Identifizierung das Endgerät für eine Nutzung der vernetzbaren Rechner-Infrastruktur in einem entsprechenden Subnutzer-Bereich freigegeben wird. Unter einer Nutzung im Subnutzer-Bereich ist hierbei insbesondere zu verstehen, dass das Endgerät nur für eine Nutzung von Funktionen freigegeben wird, für welche der betreffende Subnutzer eine entsprechende Berechtigung aufweist. Dies kann insbesondere umfassen, dass innerhalb eines dem Nutzer zugewiesenen Bereiches globale Funktionen der vernetzbaren Rechner-Infrastruktur existieren, welche für alle Subnutzer dieses Bereiches zur Verfügung stehen. In diesem Fall hat das Endgerät Zugriff auf die besagten globalen Funktionen, und von den für die einzelnen Subnutzer spezifischen Funktionen nur Zugriff auf diejenigen Funktionen, welche im Subnutzer-Bereich freigegeben sind. Als Subnutzer kommen hierbei insbesondere einzelne Verwender von Endgeräten in Betracht.

Eine derartige Struktur kann beispielsweise im Fall gegeben sein, dass zunächst ein Betreiber einer vernetzbaren Rechner-Infrastruktur, z.B. ein Cloud-Dienstleister, diese generell einer Mehrzahl an Unternehmen, welche die einzelnen Nutzer bilden, zur Verfügung stellt und ihnen jeweils entsprechende Bereiche zuweist. Ist nun beispielsweise eines dieser Unternehmen gegeben durch einen Hersteller von Maschinen und Anlagen, deren Betrieb bevorzugt in besonderer Weise für eine Wartung und/oder Instandhaltung zu überwachen ist, so kann der Hersteller der Anlagen als Nutzer in seinem zugewiesenen Nutzer-Bereich der vernetzbaren Rechner-Infrastruktur einzelne Subnutzer-Bereiche vorsehen, wobei die Subnutzer ihrerseits gegeben sind durch die Anwender der Anlagen des betreffenden Benutzers. Unterschiedliche Subnutzer haben hierbei jeweils nur Zugriff auf die für ihre jeweils eigenen Anlagen relevanten Funktionen im Rahmen der vernetzbaren Rechner-Infrastruktur.

Vorteilhafterweise erfolgt beim Zugriff der Funktion aus der vernetzbaren Rechner-Infrastruktur auf das in der Zugangszone registrierte Endgerät eine Eingabe eines Identifikators durch den Verwender des Endgerätes und/oder eine automatisierte Eingabe des Identifikators durch das Endgerät an die Funktion, wobei das Endgerät anhand des Identifikators für die vernetzbare Rechner-Infrastruktur identifiziert wird. Insbesondere erfolgt die Eingabe des Identifikators dabei an eine in der vernetzbaren Rechner-Infrastruktur implementierte Funktion zur Verwaltung der Zugangszone, z.B. eine eigens vorgesehene Identifizierungsfunktion. durch ein vorheriges Festlegen eines entsprechenden Identifikators, ggf. durch einen Nutzer der vernetzbaren Rechner-Infrastruktur, kann der Aufwand zur Identifizierung verringert werden. Der Identifikator kann hierbei durch eine Verwender-Kennung und/oder eine spezifische Geräte-Kennung gegeben sein, wobei die Geräte-Kennung insbesondere von bestimmten, insbesondere individuell charakteristischen Hardware-Parametern des Endgerätes abhängig sein kann.

In einer vorteilhaften Ausgestaltung greift als Funktion der vernetzbaren Rechner-Infrastruktur eine Zugangszonen-Verwaltung der vernetzbaren Rechner-Infrastruktur auf das in der Zugangszone registrierte Endgerät, und hierbei insbesondere auf einen Identifikator des Endgerätes zu, wobei die Identifizierung des Endgerätes und die Freigabe des Endgerätes für eine Nutzung der vernetzbaren Rechner-Infrastruktur durch die Zugangszonen-Verwaltung, und hierbei insbesondere anhand des Identifikators, erfolgt. Dies umfasst insbesondere, dass in den Programm-Applikationen der vernetzbaren Rechner-Infrastruktur die Zugangszonen-Verwaltung als eigenständige Registrierungs- und Identifizierungsfunktion vorgesehen und eingerichtet ist, mittels derer die Identifizierung durch die entsprechende Eingabe, insbesondere die eines Identifikators, erfolgt.

Vorzugsweise identifiziert die Zugangszonen-Verwaltung das Endgerät anhand einer Anzahl an gerätespezifischen Parametern. Insbesondere sind diese gerätespezifischen Parameter, welche durch Hardware-Parameter und/oder -Eigenschaften und/oder -Konfigurationen wie z.B. auch Pin-Settings gegeben sein können, oder durch Einträge in einem nicht-flüchtigen Speicher des Endgerätes hinterlegt sein können, individuell für das Endgerät charakteristisch. Bei einem gerätespezifischen Parameter, welcher in einem nicht-flüchtigen Speicher des Endgerätes hinterlegt ist, kann es sich insbesondere um besondere Betriebssystem- oder Firmware-Einstellungen handeln. Die entsprechenden Parameter sind in der Zugangszonen-Verwaltung hinterlegt, und können bei einer Registrierung eines Endgerätes zur Überprüfung verglichen werden, was bevorzugt automatisiert, also insbesondere ohne eine weitere Eingabe des Verwenders des Endgerätes erfolgt.

Das Geräte-Zertifikat wird bevorzugt getrennt von der vernetzbaren Rechner-Infrastruktur in das Endgerät eingegeben, d. h., dass zum Zeitpunkt der Eingabe des Geräte-Zertifikates in das Endgerät keine Datenverbindung vom Endgerät zur vernetzbaren Rechner-Infrastruktur besteht. Die Eingabe kann dabei beispielsweise über eine kabelgebundene Verbindung zu einem USB-Speicher oder zu einem von der vernetzbaren Rechner-Infrastruktur getrennten Rechner erfolgen, welcher mit einem entsprechenden Speichermedium ausgerüstet ist.

In einer vorteilhaften Ausgestaltung wird für eine Kommunikation des Endgerätes mit der vernetzbaren Rechner-Infrastruktur ein Publish-Subscribe-Protokoll verwendet. Die Kommunikation eines Endgerätes mit einer vernetzbaren Rechner-Infrastruktur wie z.B. einem Cloud-Dienst kann einerseits Request-Resonse-basiert ablaufen. Dies bedeutet, dass für eine konkrete Anfrage von einem Teilnehmer des Kommunikationsprotokolls an den anderen Teilnehmer eine dauerhafte Verbindung und entsprechende Zuordnung möglich ist, was mit einer zunehmenden Teilnehmeranzahl und insbesondere bei einer Asymmetrie (Anfragen von vielen "Clients" an einen "Server", Antwort des einen "Server" an potentiell viele "Clients") zu einer Verlangsamung der Kommunikation führen kann. In einem Kommunikationsprotokoll nach dem Publish-Subscribe-Prinzip veröffentlicht ein Teilnehmer eine mit einem Marker versehene Nachricht ("publish), welche a priori von beliebigen anderen Teilnehmern gelesen werden kann. Die anderen Teilnehmer können nun selbst diejenigen Marker definieren, deren Nachrichten sie überhaupt empfangen/lesen möchten ("subscribe"). Dies vereinfacht die Kommunikation in komplexen Netzwerken erheblich. Gerade für eine Verbindung von potentiell vielen Endgeräten an die vernetzbare Rechner-Infrastruktur ist daher ein Publish-Subscribe-Protokoll für einen niedrigen Kommunikations-Overhead vorteilhaft.

Bevorzugt erfolgt eine Kommunikation des Endgerätes mit der vernetzbaren Rechner-Infrastruktur im Rahmen eines OPC-UA-Protokolls. Das OPC-UA-Protokoll ist ein Protokoll zum automatisierten Informationsaustausch zwischen Endgeräten, wie sie insbesondere in industriellen Maschinen gegeben sein können. Zur Anbindung eines Endgerätes an eine vernetzbare Rechner-Infrastruktur, insbesondere an einen Cloud-Dienst, im Rahmen des OPC-UA-Protokolls, ist das vorgeschlagene Verfahren besonders vorteilhaft, da das Protokoll selbst keinen Standard für eine sichere Anbindung von Endgeräten bereitstellt. Dieser Mangel kann nun mit dem vorliegenden Verfahren überwunden werden.

Die Erfindung nennt weiter ein Computerprogrammprodukt mit Programmcode zur Implementierung einer Zugangszone für eine übergeordnete, vernetzbare Rechner-Infrastruktur zur Anbindung wenigstens eines Endgerätes, und zur Implementierung eines Zugriffs von wenigstens einer Funktion aus der vernetzbaren Rechner-Infrastruktur in die Zugangszone, wenn das Computerprogrammprodukt auf wenigstens einem Rechner der vernetzbaren Rechner-Infrastruktur ausgeführt wird, wobei das wenigstens eine Endgerät anhand eines Geräte-Zertifikats in der implementierten Zugangszone registrierbar ist, wobei durch den implementierten Zugriff der Funktion auf das wenigstens eine in der Zugangszone registrierte Endgerät dieses für die vernetzbare Rechner-Infrastruktur identifizierbar ist, und bei einer erfolgreichen Identifizierung des Endgerätes für dieses eine Nutzung der vernetzbaren Rechner-Infrastruktur freigebbar ist.

Die für das Verfahren und für seine Weiterbildungen angegebenen Vorteile können sinngemäß auf das Computerprogrammprodukt übertragen werden. Bevorzugt ist das Computerprogrammprodukt auf einem Speichermittel der vernetzbaren Rechner-Infrastruktur hinterlegt, und wird auf einem Prozessor- bzw. Rechenmittel der vernetzbaren Rechner-Infrastruktur ausgeführt.

Die Erfindung nennt zudem eine vernetzbare Rechner-Infrastruktur, umfassend eine Anzahl an Ports zum Aufbau jeweils wenigstes einer Datenverbindung zu einem insbesondere externen, also a priori der vernetzbaren Rechner-Infrastruktur nicht zugehörigen Endgerät, weiter umfassend einen nichtflüchtigen Speicher zur Hinterlegung eines Geräte-Zertifikats, sowie wenigstens einen Rechner mit wenigstens einem Prozessor. Hierbei ist der Rechner dazu eingerichtet, eine der vernetzten Infrastruktur vorgeschaltete Zugangszone zu implementieren, in welcher ein über den oder einen Port verbundenes Endgerät anhand des Geräte-Zertifikats registrierbar ist, einen Zugriff einer Funktion aus der vernetzbaren Rechner-Infrastruktur auf das in der Zugangszone registrierte Endgerät zu dessen Identifizierung für die vernetzbare Rechner-Infrastruktur zu implementieren, und für eine erfolgreiche Identifizierung des Endgerätes für dieses eine Nutzung der vernetzbaren Rechner-Infrastruktur zu implementieren.

Die für das Verfahren und für seine Weiterbildungen angegebenen Vorteile können sinngemäß auf die vernetzbare Rechner-Infrastruktur übertragen werden. Bevorzugt ist die vernetzbare Rechner-Infrastruktur als Cloud-Dienst implementiert.

Nachfolgend wird ein Ausführungsbeispiel der Erfindung anhand von Zeichnungen näher erläutert. Hierbei zeigt schematisch:

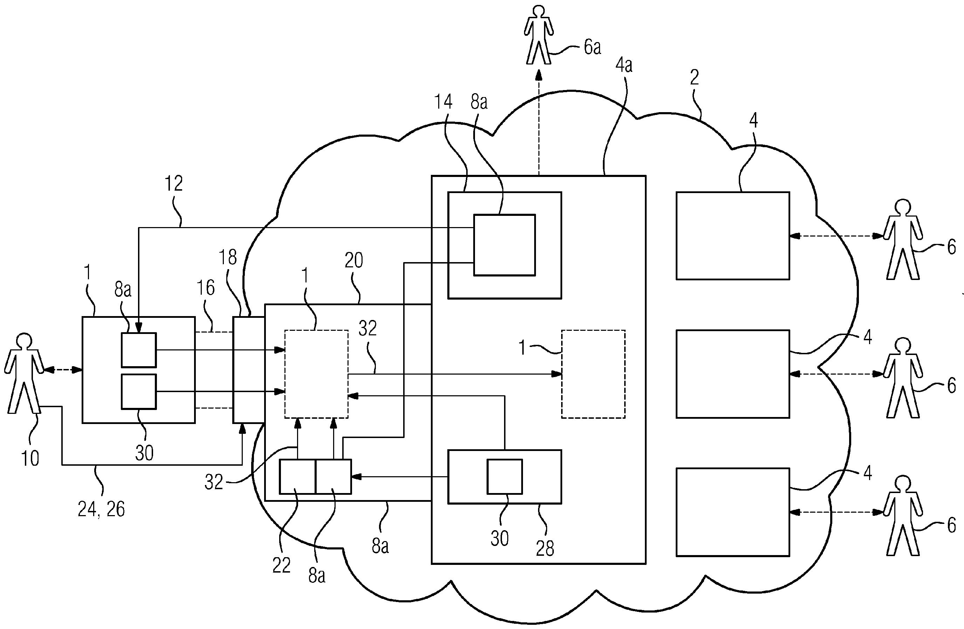

- FIG 1: in einem Blockdiagramm ein Verfahren zur Anbindung eines Endgerätes in eine vernetzbare Rechner-Infrastruktur.

In FIG 1 ist schematisch in einem Blockdiagramm ein Verfahren dargestellt, durch welches ein Endgerät 1 an eine vernetzbare Rechner-Infrastruktur 2 angebunden wird. Die vernetzbare Rechner-Infrastruktur 2 ist hierbei vorliegend durch einen Cloud-Dienst gegeben, welcher strukturell in unterschiedliche Bereiche 4 aufgeteilt ist, die jeweils unterschiedlichen Nutzern 6 zugewiesen sind. Dies umfasst insbesondere voneinander getrennte Speicherbereiche im Speicherplatz der vernetzbaren Rechner-Infrastruktur 2, sowie gegebenenfalls auch ein Zugriff auf unterschiedliche Funktionen und/oder Applikationen der vernetzbaren Rechner-Infrastruktur 2 für die unterschiedlichen Nutzern zugewiesenen Bereiche 4.

Das Endgerät 1 soll nun für eine Kommunikation mit einem konkreten Nutzer-Bereich 4a der vernetzten Rechner-Infrastruktur 2 über ein OPC-UA-Pub/Sub-Protokoll verbunden werden, wobei der Nutzer-Bereich 4a einem bestimmten Nutzer 6a zugewiesen ist. Hierfür wird zunächst durch eine Funktion im Nutzer-Bereich 4a ein nutzer-spezifisches Geräte-Zertifikat 8 erstellt. Dies kann durch den Nutzer 6a erfolgen, oder auch auf dessen Veranlassung durch den Betreiber des Cloud-Dienstes, welcher die vernetzbare Rechner-Infrastruktur 2 bildet. Der Verwender 10 des Endgerätes 1 kann das Geräte-Zertifikat 8a über eine Datenverbindung 12 von einem entsprechenden Portal 14 aus der vernetzbaren Rechner-Infrastruktur 2 herunterladen. Das Portal 14 ist hierbei derart mit dem Nutzer-Bereich 6a verbunden, dass nur aus diesem Nutzer-Bereich 6a entsprechende Geräte-Zertifikate 8, 8a zum Download zur Verfügung stellen kann. Für die anderen Nutzer 6 und den von diesen zur Verfügung gestellten Geräte-Zertifikate, welche hier nicht näher dargestellt sind, sollen eigene Portale bereitgestellt werden.

Der Verwender 10 des Endgerätes 1 überträgt nun das Geräte-Zertifikat 8a auf das Endgerät 1. Dies kann z.B. durch eine direkte, unmittelbare Weiterleitung des auf einen Rechner heruntergeladenen Geräte-Zertifikates 8a an das Endgerät 1 erfolgen, welches an den besagten Rechner angeschlossen ist, oder auch unter Zuhilfenahme eines nicht-flüchtigen Speichermediums, auf welchem das Geräte-Zertifikat 8a gespeichert wird und von welchem aus, ggf. über einen Rechner, eine Verbindung zum Endgerät 1 zur Übertragung des Geräte-Zertifikats 1 aufgebaut wird.

Über eine weitere Datenverbindung 16, welche kabellos oder kabelgebunden sein kann, wird nun das Endgerät 1 mit einem Port 18 verbunden, welcher strukturell zunächst als Teil der vernetzbaren Rechner-Infrastruktur 2 anzusehen ist, z.B. in Form eines Zugangsports zu einem Server o.ä.

Bei der Verbindung mit dem Port 18 wird jedoch das Endgerät nicht mit einem Back-End der vernetzbaren Rechner-Infrastruktur 2 oder einem Authentifikations-Assistenten für einen direkten Zugang ins besagte Back-End verbunden. Vielmehr ist beim Aufbau der Datenverbindung 16 zum Port 18 der eigentlichen vernetzbaren Rechner-Infrastruktur 2, also insbesondere einer vollständigen Nutzung deren Funktionen durch das Endgerät 1 im Rahmen der Berechtigung des Nutzer-Bereichs 4a, eine Zugangszone 20 vor- bzw. zwischengeschaltet. Die Zugangszone ist hierbei generell durch entsprechende Funktionen der vernetzbaren Rechner-Infrastruktur 2 zu implementieren, so dass die Nutzung ihrer eigentlichen Funktionen - also insbesondere der Zugriff auf Speicherplatz, Rechenleistung und Programm-Applikationen je nach Berechtigung eines Nutzers und eines Verwenders eines anzubindenden Endgerätes - durch die Zugangszone "abgeschirmt" wird.

Über die Datenverbindung 16 wird nun vom Endgerät 1 aus das Geräte-Zertifikat 8a an eine Zugangszonen-Verwaltung 22 übertragen, welche in der Zugangszone insbesondere als Sonderfunktion der vernetzbaren Rechner-Infrastruktur 2 implementiert ist. Dies kann z.B. in Kombination mit einer für den Verwender spezifischen Anmeldekennung 24 erfolgen, oder isoliert auf eine Abfrage der Zugangszonen-Verwaltung 22 hin. Anhand des Geräte-Zertifikats 8a erkennt die Zugangszonen-Verwaltung 22 eine Berechtigung des Endgerätes 1 für die Zugangszone 20, und registriert dieses.

In der Zugangszone 20 wird nun das registrierte Endgerät 1 sozusagen "geparkt", bis es vollständig identifiziert ist. Die Identifizierung kann dabei durch eine Eingabe 26 des Verwenders 10 an eine entsprechende Identifizierungsfunktion 28 erfolgen, welche im Nutzer-Bereich 4a der vernetzbaren Rechner-Infrastruktur 2 implementiert ist, und/oder anhand eines Identifikators 30, welcher dem Endgerät 1 individuell zugeordnet ist, und zudem in der Identifizierungsfunktion 28 zur Identifizierung des Endgerätes 1 hinterlegt ist.

Nach einer erfolgreichen Identifizierung durch die Identifizierungsfunktion 28 wird die Zugangszonen-Verwaltung 22 entsprechend in Kenntnis gesetzt, dass das Endgerät über eine Berechtigung zur Nutzung der vernetzbaren Rechner-Infrastruktur 2 im Rahmen der im Nutzer-Bereich 4a vorgesehenen Funktionen verfügt. Die Zugangszonen-Verwaltung 22, welche z.B. in Gestalt eines MQTT-Brokers vorliegen kann, ordnet dem Endgerät 1 ein sog. Nutzungs-Token 32 für diese Nutzung an, welches vom entsprechenden Nutzer-Bereich 4a erkannt werden kann. Das Endgerät 1 erhält somit durch die Zuweisung des Nutzungs-Tokens 32 den Zugriff auf die Funktionen - als insbesondere auf Speicherplatz, Rechenleistung, und Programm-Applikationen - im Nutzer-Bereich 4a der vernetzbaren Rechner-Infrastruktur 2.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

## Patentansprüche

1. Verfahren zur Anbindung eines Endgerätes (1) an eine vernetzbare Rechner-Infrastruktur (2),
wobei ein Geräte-Zertifikat (8a) erstellt und einem Verwender (10) des Endgerätes (1) zur Verfügung gestellt wird,
wobei das Geräte-Zertifikat (8a) in das Endgerät (1) eingegeben wird, welches Geräte-Zertifikat (8a) als universelles Geräte-Zertifikat einmalig für eine Vielzahl an Endgeräten erstellt wird, wobei eine Datenverbindung (18) vom Endgerät (1) zu einer den Funktionen der vernetzbaren Rechner-Infrastruktur (2) vorgeschalteten Zugangszone (20) hergestellt wird, welche von den Funktionen der vernetzbaren Rechner-Infrastruktur (2) selektiv durch diese trennbar ist,
wobei das Endgerät (1) anhand des Geräte-Zertifikats (8a) in der Zugangszone (20) registriert wird,
wobei durch einen Zugriff einer Funktion (28) aus der vernetzbaren Rechner-Infrastruktur (2) auf das in der Zugangszone (20) registrierte Endgerät (2) dieses für die vernetzbare Rechner-Infrastruktur identifiziert (1) wird, und
wobei bei einer erfolgreichen Identifizierung des Endgerätes (1) für dieses eine Nutzung der vernetzbaren Rechner-Infrastruktur (2) freigegeben wird,
indem durch eine Zugangszonen-Verwaltung (22) dem Endgerät ein Nutzung-Token (32) zugeordnet wird, welcher Nutzungs-Token (32) von einem entsprechenden Nutzer-Bereich (4a) der vernetzbaren Rechner-Infrastruktur (2) erkannt werden kann.

2. Verfahren nach Anspruch 1,
wobei in der vernetzbaren Rechner-Infrastruktur (2) eine Mehrzahl an jeweils verschiedenen Nutzern (6, 6a) zugewiesenen Nutzer-Bereichen (4, 4a) bereitgestellt wird,
wobei durch einen Zugriff einer Funktion (28) aus einem entsprechenden Nutzer-Bereich (4a) der vernetzbaren Rechner-Infrastruktur (2) das in der Zugangszone (20) registrierte Endgerät (1) identifiziert wird, und
wobei bei einer erfolgreichen Identifizierung des Endgerätes (1) für dieses eine Nutzung der vernetzbaren Rechner-Infrastruktur (2) im entsprechenden Nutzer-Bereich (4a) freigegeben wird.

3. Verfahren nach Anspruch 2,
wobei ein nutzer-spezifisches Geräte-Zertifikat (8a) für einen bestimmten Nutzer-Bereich (4a) erstellt wird,
wobei das Endgerät (1) anhand des nutzer-spezifischen Geräte-Zertifikats (8a) in einer dem entsprechenden Nutzer-Bereich (4a) der vernetzbaren Rechner-Infrastruktur (2) vorgeschalteten, nutzer-spezifischen Zugangszone (20) registriert wird, und
wobei durch einen Zugriff einer Funktion (28) aus dem entsprechenden Nutzer-Bereich (4a) der vernetzbaren Rechner-Infrastruktur (2) das in der nutzer-spezifischen Zugangszone (20) registrierte Endgerät (1) identifiziert wird.

4. Verfahren nach Anspruch 2 oder Anspruch 3,
wobei das nutzer-spezifische Geräte-Zertifikat (8a) durch den Nutzer (6a) zur Verfügung gestellt wird.

5. Verfahren nach einem der Ansprüche 2 bis 4,
wobei in einem Nutzer-Bereich (6a) eine Mehrzahl an Subnutzer-Bereichen bereitgestellt wird, welche jeweils für einen Zugriff durch unterschiedliche Subnutzer eingerichtet sind, und
wobei bei einer erfolgreichen Identifizierung das Endgerät (1) für eine Nutzung der vernetzbaren Rechner-Infrastruktur in einem entsprechenden Subnutzer-Bereich freigegeben wird.

6. Verfahren nach einem der vorhergehenden Ansprüche,
wobei beim Zugriff der Funktion (28) aus der vernetzbaren Rechner-Infrastruktur (2) auf das in der Zugangszone (20) registrierte Endgerät (1) eine Eingabe (26) eines Identifikators (30) durch den Verwender (10) des Endgerätes (1) und/oder eine automatisierte Eingabe (26) des Identifikators (30) durch das Endgerät (1) an die Funktion (28) erfolgt, und
wobei das Endgerät (1) anhand des Identifikators (30) für die vernetzbare Rechner-Infrastruktur (2) identifiziert wird.

7. Verfahren nach einem der vorhergehenden Ansprüche,
wobei als Funktion (28) der vernetzbaren Rechner-Infrastruktur (2) eine Zugangszonen-Verwaltung (22) auf das in der Zugangszone (20) registrierte Endgerät (1) zugreift, und
wobei die Identifizierung des Endgerätes (1) und/oder die Freigabe des Endgerätes (1) für eine Nutzung der vernetzbaren Rechner-Infrastruktur (2) durch die Zugangszonen-Verwaltung (22) erfolgt.

8. Verfahren nach Anspruch 7,
wobei die Zugangszonen-Verwaltung (22) das Endgerät (1) anhand einer Anzahl an gerätespezifischen Parametern identifiziert.

9. Verfahren nach einem der vorhergehenden Ansprüche,
wobei die Eingabe des Geräte-Zertifikates (8a) in das Endgerät (1) während der Fertigung des Endgerätes (1) in einen Speicher des Endgerätes (1) und/oder durch einen Anschluss eines nicht-flüchtigen Speichermediums, auf welchem das Geräte-Zertifikat (8a) gespeichert ist, an das Endgerät 81) erfolgt.

10. Verfahren nach einem der vorhergehenden Ansprüche,
wobei für eine Kommunikation des Endgerätes (1) mit der vernetzbaren Rechner-Infrastruktur (2) ein Publish-Subscribe-Protokoll verwendet wird.

11. Verfahren nach einem der vorhergehenden Ansprüche,
wobei eine Kommunikation des Endgerätes (1) mit der vernetzbaren Rechner-Infrastruktur (2) im Rahmen eines OPC-UA-Protokolls erfolgt.

12. Verfahren nach einem der vorhergehenden Ansprüche,
wobei als vernetzbare Rechner-Infrastruktur (2) ein Cloud-Dienst genutzt wird.

13. Computerprogrammprodukt mit Programmcode zur Implementierung einer Zugangszone (20) für eine übergeordnete, vernetzbare Rechner-Infrastruktur (2) zur Anbindung wenigstens eines Endgerätes (1), und zur Implementierung eines Zugriffs von wenigstens einer Funktion (28) aus der vernetzbaren Rechner-Infrastruktur (2) in die Zugangszone (20), wenn das Computerprogrammprodukt auf wenigstens einem Rechner der vernetzbaren Rechner-Infrastruktur (2) ausgeführt wird,
wobei das wenigstens eine Endgerät (1) anhand eines Geräte-Zertifikats (8a) in der implementierten Zugangszone (20) registrierbar ist,
welches Geräte-Zertifikat als universelles Geräte-Zertifikat einmalig für eine Vielzahl an Endgeräten erstellt wird, wobei durch den implementierten Zugriff der Funktion (28) auf das wenigstens eine in der Zugangszone (20) registrierte Endgerät (1) dieses für die vernetzbare Rechner-Infrastruktur (2) identifizierbar ist, und bei einer erfolgreichen Identifizierung des Endgerätes (1) für dieses eine Nutzung der vernetzbaren Rechner-Infrastruktur (2) freigebbar ist,
indem durch eine Zugangszonen-Verwaltung (22) dem Endgerät ein Nutzung-Token (32) zugeordnet wird, welcher Nutzungs-Token (32) von einem entsprechenden Nutzer-Bereich (4a) der vernetzbaren Rechner-Infrastruktur (2) erkannt werden kann.

14. Vernetzbare Rechner-Infrastruktur (2), umfassend:
- eine Anzahl an Ports (18) zum Aufbau jeweils wenigstes einer Datenverbindung (16) zu einem Endgerät (1),
- einen nichtflüchtigen Speicher zur Hinterlegung eines Geräte-Zertifikats (8a),
welches Geräte-Zertifikat als universelles Geräte-Zertifikat einmalig für eine Vielzahl an Endgeräten erstellt wird, und
- wenigstens einen Rechner mit wenigstens einem Prozessor, wobei der Rechner dazu eingerichtet ist,
- eine den Funktionen der vernetzten Infrastruktur (2) vorgeschaltete Zugangszone (20) zu implementieren, in welcher ein über den oder einen Port (18) verbundenes Endgerät (1) anhand des Geräte-Zertifikats (8a) registrierbar ist,
- einen Zugriff einer Funktion (28) aus der vernetzbaren Rechner-Infrastruktur (2) auf das in der Zugangszone (20) registrierte Endgerät (1) zu dessen Identifizierung für die vernetzbare Rechner-Infrastruktur (2) zu implementieren, und
- für eine erfolgreiche Identifizierung des Endgerätes (1) für dieses eine Nutzung der vernetzbaren Rechner-Infrastruktur (2) zu implementieren,
indem durch eine Zugangszonen-Verwaltung (22) dem Endgerät ein Nutzung-Token (32) zugeordnet wird, welcher Nutzungs-Token (32) von einem entsprechenden Nutzer-Bereich (4a) der vernetzbaren Rechner-Infrastruktur (2) erkannt werden kann.

15. Vernetzbare Rechner-Infrastruktur (2) nach Anspruch 14, welche als Cloud-Dienst ausgebildet ist.

## Claims

1. Method for connecting an end device (1) to a linkable computer infrastructure (2),
wherein a device certificate (8a) is created and supplied to a user (10) of the end device (1),
wherein the device certificate (8a) is input into the end device (1), which device certificate (8a) is created as a uniform device certificate once for a large number of end devices,
wherein a data link (18) from the end device (1) to an access zone (20) connected upstream of the functions of the linkable computer infrastructure (2) is produced, which zone can be selectively separated from the functions of the linkable computer infrastructure (2) by this link,
wherein the end device (1) is registered in the access zone (20) using the device certificate (8a),
wherein by access of a function (28) from the linkable computer infrastructure (2) to the end device (2) registered in the access zone (20), this end device is identified for the linkable computer infrastructure (1), and
wherein with successful identification of the end device (1), use of the linkable computer infrastructure (2) is enabled for this end device,
by a use token (32) being allocated to the end device by means of an access zone management (22), which use token (32) can be identified by a corresponding user space (4a) of the linkable computer infrastructure (2).

2. Method according to claim 1,
wherein a plurality of user spaces (4, 4a) assigned to different users (6, 6a) respectively is supplied in the linkable computer infrastructure (2),
wherein the end device (1) registered in the access zone (20) is identified by access of a function (28) from a corresponding user space (4a) of the linkable computer infrastructure (2), and
wherein with successful identification of the end device (1), use of the linkable computer infrastructure (2) in the corresponding user space (4a) is enabled for this end device.

3. Method according to claim 2,
wherein a user-specific device certificate (8a) is created for a particular user space (4a),
wherein, using the user-specific device certificate (8a), the end device (1) is registered in a user-specific access zone (20) connected upstream of the corresponding user space (4a) of the linkable computer infrastructure (2), and
wherein the end device (1) registered in the user-specific access zone (20) is identified by access of a function (28) from the corresponding user space (4a) of the linkable computer infrastructure (2).

4. Method according to claim 2 or claim 3,
wherein the user-specific device certificate (8a) is supplied by the user (6a).

5. Method according to one of claims 2 to 4,
wherein in a user space (6a), a plurality of sub-user spaces is supplied, which are adapted for access by different subusers respectively, and
wherein with successful identification, the end device (1) is enabled for use of the linkable computer infrastructure in a corresponding sub-user space.

6. Method according to one of the preceding claims,
wherein on access of the function (28) from the linkable computer infrastructure (2) to the end device (1) registered in the access zone (20), an input (26) of an identifier (30) is made by the user (10) of the end device (1) and/or an automatic input (26) of the identifier (30) is made by the end device (1) to the function (28), and
wherein the end device (1) is identified using the identifier (30) for the linkable computer infrastructure (2).

7. Method according to one of the preceding claims,
wherein as a function (28) of the linkable computer infrastructure (2), an access zone management (22) accesses the end device (1) registered in the access zone (20), and wherein the end device (1) is identified and/or the end device (1) is enabled for use of the linkable computer infrastructure (2) by the access zone management (22).

8. Method according to claim 7,
wherein the access zone management (22) identifies the end device (1) using a number of device-specific parameters.

9. Method according to one of the preceding claims,
wherein the device certificate (8a) is input into the end device (1) during manufacture of the end device (1) in a storage device of the end device (1) and/or by connection of a non-volatile storage medium, on which the device certificate (8a) is stored, to the end device 81).

10. Method according to one of the preceding claims,
wherein a publish-subscribe protocol is used for communication of the end device (1) with the linkable computer infrastructure (2).

11. Method according to one of the preceding claims,
wherein communication of the end device (1) with the linkable computer infrastructure (2) takes place in the framework of an OPC-UA protocol.

12. Method according to one of the preceding claims,
wherein a cloud service is used as the linkable computer infrastructure (2).

13. Computer program product having program code for implementation of an access zone (20) for a higher-order, linkable computer infrastructure (2) for connection of at least one end device (1), and for implementation of access of at least one function (28) from the linkable computer infrastructure (2) in the access zone (20) when the computer program product is run on at least one computer of the linkable computer infrastructure (2),
wherein the at least one end device (1) can be registered in the implemented access zone (20) using a device certificate (8a),
which device certificate is created as a uniform device certificate once for a large number of end devices, wherein by way of the implemented access of the function (28) to the at least one end device (1) registered in the access zone (20), the end device can be identified for the linkable computer infrastructure (2), and with successful identification of the end device (1), use of the linkable computer infrastructure (2) is enabled for this device, by a use token (32) being allocated to the end device by means of an access zone management (22), which use token (32) can be identified by a corresponding user space (4a) of the linkable computer infrastructure (2).

14. Linkable computer infrastructure (2), comprising:
- a number of ports (18) for establishing at least one data link (16) respectively to an end device (1),
- a non-volatile storage device for storing a device certificate (8a),
which device certificate is created as a uniform device certificate once for a large number of end devices, and
- at least one computer having at least one processor, wherein the computer is adapted:
- to implement an access zone (20) connected upstream of the functions of the linked infrastructure (2), in which zone an end device (1) connected by the or a port (18) can be registered using the device certificate (8a),
- to implement access of a function (28) from the linkable computer infrastructure (2) to the end device (1) registered in the access zone (20) for the identification thereof for the linkable computer infrastructure (2), and
- for successful identification of the end device (1), to implement use of the linkable computer infrastructure (2) for this device,
by a use token (32) being allocated to the end device by means of an access zone management (22), which use token (32) can be identified by a corresponding user space (4a) of the linkable computer infrastructure (2).

15. Linkable computer infrastructure (2) according to claim 14, which is designed as a cloud service.

## Revendications

1. Procédé de connexion d'un terminal (1) à une infrastructure (2) de calcul pouvant être connectée au réseau,
dans lequel on établit un certificat (8a) d'appareil et on le met à disposition d'un utilisateur (10) du terminal (1),
dans lequel on entre le certificat (8a) d'appareil dans le terminal (1),
lequel certificat (8a) d'appareil est établi comme certificat d'appareil universel une fois pour une pluralité de terminaux, dans lequel on produit une liaison (18) de donnée du terminal (1) à une zone (20) d'accès en amont des fonctions de l'infrastructure (2) de calcul pouvant être connectée au réseau, zone qui peut être séparée des fonctions de l'infrastructure (2) de calcul pouvant être connectée au réseau sélectivement par celle-ci,
dans lequel on enregistre le terminal (1) dans la zone (20) d'accès à l'aide du certificat (8a) d'appareil,
dans lequel par un accès à une fonction (28) de l'infrastructure (2) de calcul pouvant être connectée au réseau, on identifie sur l'appareil (2) enregistré dans la zone (20) d'accès celui-ci pour l'infrastructure de calcul pouvant être connectée au réseau, et
dans lequel, lorsque l'identification du terminal (1) est couronné de succès, on valide pour celui-ci une utilisation de l'infrastructure (2) de calcul pouvant être connectée au réseau, par le fait que l'on associe, par une gestion (22) de zone d'accès, au terminal un signe (32) d'utilisation, lequel signe (32) d'utilisation peut être détecté par une partie (4a) d'utilisateur correspondante de l'infrastructure (2) de calcul pouvant être connectée au réseau.

2. Procédé suivant la revendication 1,
dans lequel on met à disposition dans l'infrastructure (2) de calcul pouvant être connectée au réseau une pluralité de parties (4, 4a) d'utilisateurs affectées à respectivement des utilisateurs (6, 6a) différents,
dans lequel par un accès à une fonction d'une partie (4a) d'utilisateur correspondante de l'infrastructure (2) de calcul pouvant être connecté au réseau, on identifie le terminal (1) enregistré dans la zone (20) d'accès, et
dans lequel si l'identification du terminal (1) est couronné de succès, on valide pour celui-ci une utilisation de l'infrastructure (2) de calcul pouvant être connectée au réseau dans la partie (4a) d'utilisateur correspondante.

3. Procédé suivant la revendication 2,
dans lequel on établit un certificat (8a) d'appareil spécifique à un utilisateur pour une partie (4a) d'utilisateur déterminée, dans lequel on enregistre le terminal (1) à l'aide du certificat (8a) d'appareil spécifique à un utilisateur dans une zone (20) d'accès spécifique à un utilisateur en amont de la partie (4a) d'utilisateur correspondante de l'infrastructure (2) de calcul pouvant être connectée au réseau, et
dans lequel par un accès à une fonction (28) de la partie (4a) d'utilisateur correspondante de l'infrastructure (2) de calcul pouvant être connectée au réseau, on identifie le terminal (1) enregistré dans la zone (20) d'accès spécifique à un utilisateur.

4. Procédé suivant la revendication 2 ou la revendication 3, dans lequel le certificat (8a) d'appareil spécifique à un utilisateur est mis à disposition par l'utilisateur (6a).

5. Procédé suivant l'une des revendications 2 à 4,
dans lequel on met à disposition dans une partie (6a) d'utilisateur une pluralité de sous-parties d'utilisateur qui sont conçues chacune pour un accès par des sous-utilisateurs différents, et
dans lequel si l'identification est couronnée de succès, on valide le terminal pour une utilisation de l'infrastructure de calcul pouvant être connectée au réseau dans une sous-partie d'utilisateur correspondante.

6. Procédé suivant l'une des revendications précédentes,
dans lequel, lors de l'accès de la fonction (28) de l'infrastructure (2) de calcul pouvant être connectée au réseau au terminal (1) enregistré dans la zone (20) d'accès, a lieu une entrée (26) d'un identifiant (30) par l'utilisateur du terminal (1) et/ou une entrée (26) automatisée de l'identifiant (30) par le terminal (1) à la fonction (28), et
dans lequel on identifie le terminal à l'aide de l'identifiant (30) pour l'infrastructure (2) de calcul pouvant être connectée au réseau.

7. Procédé suivant l'une des revendications précédentes,
dans lequel comme fonction (28) de l'infrastructure (2) de calcul pouvant être connectée au réseau, un gestion (22) de zone d'accès accède au terminal (1) enregistré dans la zone (2) d'accès, et
dans lequel l'identification du terminal (1) et/ou la validation du terminal (1) pour une utilisation de l'infrastructure (2) de calcul pouvant être connectée au réseau a lieu par la gestion (22) de zone d'accès.

8. Procédé suivant la revendication 7,
dans lequel la gestion (22) de zone d'accès identifie le terminal (1) à l'aide d'un certain nombre de paramètres spécifiques à un appareil.

9. Procédé suivant l'une des revendications précédentes,
dans lequel l'entrée du certificat (8a) d'appareil dans le terminal (1) a lieu pendant la fabrication du terminal (1) dans une mémoire du terminal (1) et/ou par une connexion au terminal (1) d'un support de mémoire non volatile, sur lequel est mis en mémoire le certificat (8a) d'appareil.

10. Procédé suivant l'une des revendications précédentes,
dans lequel pour une communication du terminal (1) avec l'infrastructure (2) de calcul pouvant être connectée au réseau, on utilise un protocole publish-subscribe.

11. Procédé suivant l'une des revendications précédentes,
dans lequel une communication du terminal (1) avec l'infrastructure (2) de calcul pouvant être connectée au réseau a lieu dans le cadre d'un protocole OPC-UA.

12. Procédé suivant l'une des revendications précédentes,
dans lequel on utilise un service de nuage comme infrastructure (2) de calcul pouvant être connectée au réseau.

13. Produit de programme d'ordinateur ayant des codes de programme pour la mise en œuvre d'une zone (20) d'accès pour une infrastructure (2) de calcul supérieure hiérarchiquement pouvant être connectée au réseau pour la connexion d'au moins un terminal (1) et pour la mise en œuvre d'un accès d'au moins une fonction de l'infrastructure (2) de calcul pouvant être connectée au réseau à la zone (20) d'accès, lorsque le produit de programme d'ordinateur est réalisé sur au moins un ordinateur de l'infrastructure (2) de calcul pouvant être connectée au réseau, dans lequel le au moins un terminal (1) peut être enregistré dans la zone (20) d'accès mise en œuvre à l'aide d'un certificat (8a) d'appareil,
lequel certificat d'appareil est établi comme certificat d'appareil universel une fois pour une pluralité de terminaux, dans lequel, par l'accès mis en œuvre de la fonction (28) au au moins un terminal (1) enregistré dans la zone (20) d'appareil, celui-ci peut être identifié pour l'infrastructure (2) de calcul pouvant être connectée au réseau et, si une identification du terminal (1) est couronnée de succès, une utilisation de l'infrastructure (2) de calcul pouvant être connectée au réseau peut être validée pour ce terminal,
par le fait que, par une gestion (22) de zone d'accès, il est associé au terminal un signe (32) d'utilisation, lequel signe (32) d'utilisation peut être reconnu par une partie (4a) d'utilisateur correspondante de l'infrastructure (2) de calcul pouvant être connectée au réseau.

14. Infrastructure (2) de calcul pouvant être connectée au réseau, comprenant :
- un certain nombre d'accès (18) pour l'établissement respectivement d'au moins une liaison (16) de données à un terminal (1),
- une mémoire non volatile pour la mise en mémoire d'un certificat (8a) d'appareil,
lequel certificat d'appareil est établi sous la forme d'un certificat d'appareil universel une fois pour une pluralité de terminaux, et
- au moins un ordinateur ayant au moins un processeur, dans lequel l'ordinateur est conçu,
- pour mettre en œuvre une zone (20) d'accès en amont des fonctions de l'infrastructure (2) mise en réseau, zone d'accès dans laquelle un terminal (1) relié aux ou à un accès (18) peut être enregistré à l'aide du certificat (8a) d'appareil,
- pour mettre en œuvre un accès d'une fonction (28) de l'infrastructure (2) de calcul pouvant être connectée au réseau au terminal (1) enregistré dans la zone (20) d'accès pour son identification pour l'infrastructure (2) de calcul pouvant être connectée au réseau, et,
- pour une identification couronnée de succès du terminal (1), pour mettre en œuvre pour celui-ci une utilisation de l'infrastructure (2) de calcul pouvant être connectée au réseau, par le fait que par une gestion (22) de zone d'accès il est associé au terminal un signe (32) d'utilisation, lequel signe (32) d'utilisation peut être détecté par une partie (4a) d'utilisateur correspondante de l'infrastructure (2) de calcul pouvant être connectée au réseau.

15. Infrastructure (2) de calcul pouvant être connectée au réseau suivant la revendication 14, qui est constituée en service de nuage.
